# EUROPEAN PATENT APPLICATION

(11) **EP 4 770 206 A1**
(43) Date of publication of application: **01.07.2026**
(21) Application number: 24307319.4
(22) Date of filing: 27.12.2024
(51) Int. Cl.: H04W 48/18

(54) **METHODS FOR ALLOWING A MOBILE DEVICE TO SWITCH BETWEEN PRIVATE AND PUBLIC NETWORKS, SUCH AS IN THE CONTEXT OF 5G NETWORKS**

(71) Applicant: IDEMIA France, 92400 Courbevoie (FR)
(72) Inventor: DEEPAK, Kumar, 92400 Courbevoie (FR); HAKIM, Lukman, 92400 Courbevoie (FR)
(74) Representative: Regimbeau

(57) **Abstract**

The present disclosure relates to a method (100) of switching a connection of a mobile device (1) from a first network (3) to a second network (4), the mobile device (1) comprising a secure element (2), comprising steps of:
a. receiving (S101) data comprising network location information of the second network (4),
b. causing (S102) an interruption of a connection between the mobile device (1) and the first network (3),
c. requesting (S104) the mobile device (1) to obtain data comprising network type information of the second network (4),
d. receiving said network type information,
e. checking (S106) from the network location information and network type information, whether the second network (4) is of a predefined network type and is available, and
f. if the checking indicates that the second network (4) is of the predefined network type and is available, requesting connection to the second network (4).

## Description

### TECHNICAL FIELD

The present disclosure concerns the field of mobile network communications, notably in the context of 5G networks. More specifically, it deals with methods to enable a mobile device connected to a private network to switch to a public network and vice-versa.

### STATE OF THE ART

Hereinafter, 5G refers to the fifth generation of wireless data communication for mobile carriers. In a similar way, in this document, 2G, 3G, 4G respectively stands for second generation, third generation and fourth generation.

For several years, 5G networks have been growing in use due to specific advantages they possess. One major feature of 5G networks is the ability for private organisations to use private networks operating according to the 5G norm. Such private networks allow organisations to restrict use of the network to its members, in ways similar to a WiFi network, while also presenting several advantages compared to Wi-Fi, including:
- higher power transmission rating,
- no loss of data when roaming between two networks located in different geographical areas, thanks to a soft handoff mechanism. In comparison, a connection to a WiFi network has to be broken before a device can connect to another Wi-Fi network,
- ability to handle more connections,
- ability to create multiple virtual networks within a real, shared physical network (referred to as "network slicing"),
- better robustness to outside interference.

However, the operation of switching between mobile networks, be it of a same category (public or private) or between two networks of different categories, requires a specific mobile device setup as well as a specific network infrastructure. Not all devices are therefore suited to operate a switch between two mobile networks.

In the context of private 5G networks, this is particularly problematic, since an organisation may for example wish to allow rapid and easy access to its private network(s) to its members who are currently connected to another private network or to a public network - for example, users connected to an outside public network may wish to switch to the organisation's private network upon arrival at their organisation's premises - whatever mobile device they are using to do so.

Similarly, the users may wish to easily switch to a public network from their organisation's private network upon leaving the premises.

### DISCLOSURE

Hence, there exists a need for allowing a plurality of users within an organisation to switch between two networks.

To that end, the present disclosure relates to a method of switching a connection of a mobile device from a first network to a second network, the mobile device comprising a secure element,
the method comprising the following steps implemented by the secure element:
a. receiving data comprising network location information of the second network,
b. causing an interruption of a connection between the mobile device and the first network,
c. requesting the mobile device to obtain data comprising network type information of the second network,
d. receiving the data comprising network type information from the mobile device,
e. checking from the network location information and network type information:
   i. whether the second network is of a predefined network type among a private network and a public network, and
   ii. whether the second network is available, and
f. if the checking indicates that the second network is of the predefined network type and is available, requesting the mobile device to connect to the second network.

According to some embodiments, the secure element is a user integrated circuit card, an electronic user integrated circuit card, a subscriber identity module card or an electronic subscriber identity module card.

According to some embodiments, the network type information contains data indicating that the second network is a public network or a 5G private network.

According to some embodiments, the step of causing an interruption of the connection between the mobile device and the first network is carried out:
- before requesting the mobile device to obtain data comprising network type information of the second network, or
- after a reception of information indicative of a successful connection to the second network.

According to some embodiments, steps c. to f. are initiated upon receiving, by the secure element, of information from the second network indicating that a change of location of the mobile device has taken place from a geographical zone wherein the second network is out of reach of the mobile device to a geographical zone wherein the second network is within reach of the mobile device.

According to some embodiments, the method further comprises, if the checking indicates that the second network is of the predefined network type and is available, updating a variable in a memory of the secure element representative of a current network to which the mobile device is connected.

According to some embodiments, the method further comprises:
g. checking whether the mobile device has successfully connected to the second network, and
h. if the mobile device has failed to connect to the second network, repeating steps c. to f. until
   ▪ a predefined amount of time has expired since step f. or
   ▪ step f. has been repeated a predefined number of times

According to some embodiments, the method further comprises, if the predefined amount of time has expired or if step f. has been repeated the predefined number of times:
i. reception, by the secure element from the mobile device, of information indicative of a network rejection, and
j. requesting, by the secure element, the mobile device to connect to the first network.

According to some embodiments, the secure element has a memory storing a plurality of cell indicators associated with respective networks, and wherein step e. further includes checking whether a cell indicator received from the second network is comprised in the plurality of cell indicators.

According to a second aspect, the present disclosure relates to a computer program configured to be run by a secure element and comprising instructions for implementing the method defined above.

According to a third aspect, the present disclosure relates to a secure element comprising a processor and a memory, the memory storing instructions executable by the processor for implementing the method defined above.

According to a fourth aspect, the present disclosure relates to a mobile device comprising a secure element as defined above.

### DESCRIPTION OF THE FIGURES

Other goals and advantages of the present disclosure will be illustrated in the following description, whose purpose is illustrative and not limiting, and in which:
Figure 1 shows a mobile device operating within or close to geographical zones covered by a first and a second network
Figure 2 shows a proposed method for switching the network to which the mobile device is connected.

In all figures, the same reference numerals refer to identical or similar features.

### DETAILED DESCRIPTION OF SPECIFIC EMBODIMENTS

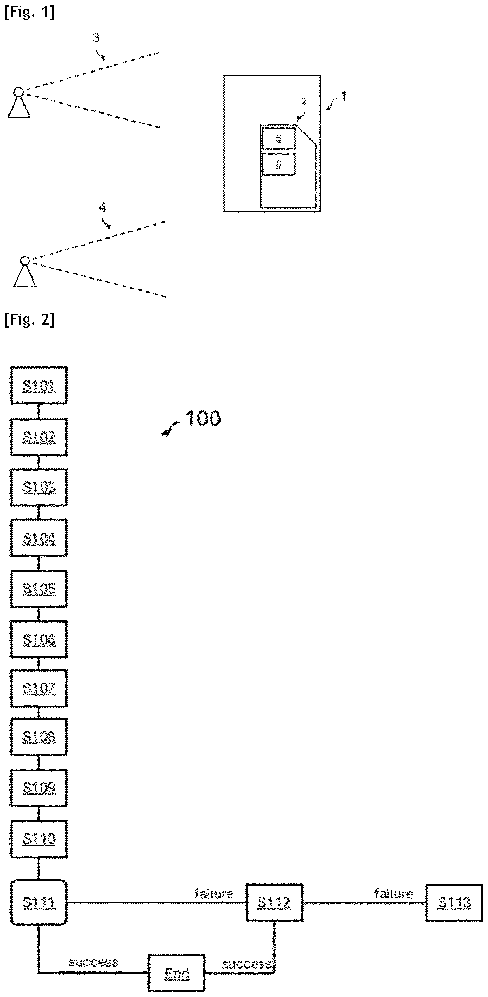

Figure 1 represents a mobile device 1 containing a secure element 2, for example a universal integrated circuit card (referred to hereinafter as UICC or UICC 2). The secure element 2 can also be of the type of SIM (for Subscriber Identity Module) card, or of its integrated version known as eUICC (for embedded UICC) or also named eSIM (for embedded SIM). Mobile device 1 is a user terminal such as a mobile phone, smartphone, tablet, portable laptop, smartwatch or any other portable device, including handheld devices.

The secure element 2 when it corresponds to an UICC or a SIM is an integrated circuit card which can be used in mobile device 1 and can be selectively removed from mobile device 1 or placed within it. When the secure element is an eUICC or an eSIM, it is directly soldered to an electronic card which is part of the device (typically the electronic mother card). For the sake of clarity in the rest of the document the invention will be described into a context where the secure element will be an UICC. But all types of secure element are applicable.

UICC 2 can be configured to operate on different types of networks such as 2G, 3G, 4G or 5G networks. UICC 2 contains a treatment unit 5, comprising a processor or a plurality of processors, allowing it to run code instructions, preferably stored in a memory 6 of UICC 2. Processor(s) 5 can be of any type, including a microprocessor. Treatment unit 5 and memory 6 can be contained in a microcontroller of UICC 2.

Code instructions stored on memory 6, which are meant to be run by treatment unit 5, may be Java-based instructions, for example stored using a Java Card platform.

The present disclosure deals with methods for changing a network to which mobile device 1 is connected. Figure 1 represents a first network 3 to which mobile device 2 is currently connected and a second network 4 to which mobile device 2 is to be connected in the future.

According to some embodiments, first network 3 is a public network, i.e., a network available to any user of a given network provider to which first network 3 belongs, while second network 4 is a private - notably 5G - network, meaning that a connection to second network 4 can only be granted to specific, predefined users. For example, second network 4 may be a private 5G network run within an organisation, access to second network 4 being restricted to members of the organisation. In other words, according to this embodiment, a method 100 for switching from first network 3 to second network 4 - represented on figure 2 - is a method for switching from a public network to a private network.

According to other embodiments, first network 3 is a private - notably 5G - network, meaning that a connection to first network 3 can only be granted to specific users. For example, first network 3 may be a private 5G network run within an organisation, access to first network 3 being restricted to members of the organisation. Second network 4 is a public network, available to any user of a given network provider to which second network 4 belongs. In other words, according to this embodiment, method 100 for switching from first network 3 to second network 4 is a method for switching from a private network to a public network.

In reference to figure 2, which illustrates an embodiment of a method 100 for allowing mobile device 1 to switch from first network 3 to second network 4, a first step of the method is the reception S101, by UICC 2, of information indicating that second network 4 is within reach of mobile device 1, that is, that mobile device 1 is close enough to a source of second network 4 to attempt connecting to second network 4. This information can be received by mobile device 1 and transmitted to UICC 2 by mobile device 1. Notably, this information can include a cell ID, which is a geographical area covered by a cell tower associated with second network 4. This indicates to UICC 2 that a connection switch to second network 4 can be initiated.

Preferably, step S101 is a "passive" reception step, that is, UICC 2 receives information from second network 4 without prompting second network 4. Second network 4 therefore autonomously sends the information to UICC 2 via mobile device 1.

In some embodiments, following reception S101, by UICC 2, of information indicating that second network 4 is within reach of mobile device 1, UICC 2 sends an instruction to mobile device 1 to cause mobile device 1 to disconnect from first network 3 to which mobile device 1 is currently connected (step S102). For some network types, such a disconnection is necessary to enable mobile device 1 to connect to second network 4. For other embodiments, step S102 may not be necessary until later in the method, as mobile device 1 may connect to second network 4 all the while being still connected to first network 3. In other words, the connection to second network 4 is established before breaking off, by UICC 2, of the connection between mobile device 1 and first network 3. This is for example possible if first network 3 and second network 4 are both 5G networks.

Some of the information received in step S101 may be used by UICC 2 to update a variable, for example stored within memory 6, indicative of a location of the mobile device 1, for example of a current network to which mobile device 1 is connected. This variable can take the form of a file stored in memory 6, called a LOCI or EF LOCI (for *Elementary File Location Information*). Therefore, following step S101, step S103 of updating said variable allows UICC 2 to have a trace of the fact that mobile device 1 is connected to first network 3 - or if a disconnection S102 from first network 3 has taken place, that mobile device 1 is now no longer connected to first network 3.

The location information obtained by UICC 2 during reception step S101 prompts UICC 2 to send a request for additional information to mobile device 1 (step S104). More specifically, UICC 2 requests from mobile device 1 that it obtain additional information from second network 4. The information requested by UICC 2 is of a nature which allows an attempt to connect mobile device 1 to second network 4.

To that effect, the information requested during step S104 can include network location information, of the same type or of a different type than information received at step S101. This new network location information allows, among other things, UICC 2 to ensure that mobile device 1 is still within reach of second network 4. This request for new network location information is not mandatory.

The information requested during step S104 includes network type information. The network type information indicates at least whether second network 4 is a public network or a private network. The network type information may also include information indicative of a technology involved in the functioning of second network 4 (such as GERAN (for GSM (for Global System for Mobile Communication) Egde Radio Access Network), UTRAN (for Universal Terrestrial Radio Access Network), NGRAN (for Next Generation Radio Access Network), or more generally 2G, 3G, 4G or 5G) and/or of a technology needed by mobile device 1 to connect to second network 4.

Upon receiving the information including network type information (step S105), UICC 2 verifies whether second network 4 is of a type - i.e., public or private - corresponding to a predefined type to which UICC 2 should attempt to connect (step S106). This ensures an attempt to connect will only be made for an adequate network type of second network 4.

According to a first embodiment, the predefined network type corresponds to a type specified by a user when prompted by mobile device 1 after reception S101 of information indicative of a network location or after reception S105 of additional network information. In this way, mobile device 1 ensures that the user wishes to connect to a specific type of network shortly before effecting the switch.

According to other embodiments, the predefined network type is specified in settings of mobile device 1, for example stored within a memory of mobile device 1 or in memory 6 of UICC 2. For instance, a user may specify as a setting that he wishes to connect to a private network when mobile device 1 is located in some predefined geographical zones, and to a public network when mobile device 1 is located in other predefined geographical zones. For example, a member of an organisation may specify as a setting that he wishes to be connected to his organisation's private network when his mobile device is within reach of this network, and to a public network when his mobile device is not within reach of the organisation's private network. Advantageously, this means that the user does not have to input any additional information into mobile device 1 to manage network connection switches, so long as he does not wish these settings to change.

According to yet other embodiments, the predefined network type is known by UICC 2 from information received at step S101 or at step S105, and which has been stored in memory 6. For example, if second network 4 is a private network, information stored in the EF LOCI and received from second network 4 at either step S101 or S105 can indicate to UICC 2 that it can only connect to a private network. Instead of the EF LOCI, such information may be stored in a EF IMSI file representative of an IMSI number of UICC 2, notably in the form of an IMSI number (which can be an IMSI of private type or an IMSI of public type), thereby enabling UICC 2 to know which type of network it needs to attempt connection to based on the type of the IMSI number. The predefined network type may also be obtained from the cell ID of second network 4 or from the access technology information received at step S105.

During step S106, UICC 2 also checks whether second network 4 is available for mobile device 1 to connect to second network 4. This is useful for example to verify that second network 4 is not saturated with connections to other devices, or requests for connection from other devices, in which case a connection of mobile device 1 to second network 4 would be of poor quality. Additionally, this allows UICC 2 to ensure that there is no breakdown of second network 4.

Optionally, to ensure that mobile device 1 only connects to networks which have previously been deemed allowable - for example, because these networks are known to be safe and/or effective - memory 6 of UICC 2 may store a list of cell identifiers (cell IDs) of such networks. During step S106 of checking data from second network 4, UICC 2 may thus verify whether a cell ID of second network 4, received during step S105, is included within the list of cell IDs stored in memory 6.

If both conditions are met - i.e., second network 4 is of the predefined type known to UICC 2 as a type it should connect to, and second network 4 is available - UICC 2 requests from mobile device 1 that it attempt connecting to second network 4 (step S108).

For embodiments for which a disconnection S102 from first network 3 is not necessary before attempting to connect to second network 4 at step S108, step S102 of disconnection can be implemented after mobile device 1 has successfully connected to second network 4. Advantageously, this ensures that UICC 2 is always connected to one of first network 3 and second network 4 at every step of method 100.

More generally, step S102 of disconnecting from first network 3 may be implemented at any point after step S101 of reception of location information, including after mobile device 1 has successfully connected to second network 4.

UICC 2 may send mobile device 1 a request for UICC reinitialisation shortly before request S108 to connect to second network 4 (step S107). Mobile device 1 then reinitialises settings of UICC 2 from settings compatible with a connection to first network 3, to settings compatible with second network 4. Among others, mobile device 1 may reinitialise an IMSI number of UICC 2 (for *International Mobile Subscriber Identity),* for example to switch from an IMSI number corresponding to a network type (public or private) compatible with first network 3, to a network type compatible with second network 4. For some types of UICC, reinitialisation of UICC 2 also enables UICC 2 to take into account update S103 of location variable.

If a first attempt to connect to second network 4 at step S108 has failed, UICC 2 may attempt to connect to second network 4 one or more additional times thereafter. Hence, if second network 4 was only temporarily unavailable or saturated with connections to other mobile devices, or if mobile device 1 was for example only temporarily outside of a working range of second network 4, UICC 2 will attempt to establish a connection again. In that case, steps S104 - S108 can be repeated.

According to some embodiments, UICC 2 can launch a timer, and/or a counter counting how many attempts have been made to connect mobile device 1 to second network 4. Such a counter may be launched by UICC 2 prior to first attempt S108 to connect to second network 4 (not shown on figure 2), or only after mobile device 1 has advised UICC 2 that said first attempt to connect failed, after step S109. UICC 2 then repeats at least steps S106 and S108, and preferably repeats steps S104 - S108 for as long as the timer has not expired and/or as long as a predefined maximum of attempts to connect has not been reached.

Both solutions allow for a reasonable number of renewed attempts to connect mobile device 1 to second network 4: on one hand, a timer ensures that a user of mobile device 1 does not have to wait for too long before mobile device 1 is successfully connected to second network 4. On the other hand, setting a maximum number of attempts to connect ensures that UICC 2 does not excessively drain a battery of mobile device 1 by repeatedly attempting to connect to an unavailable network, and ensures that mobile device 1 is not caught by a captive (unauthorised) network.

After first attempt to connect S108 (and optionally, for embodiments where repeated attempts to connect are made, after any or all subsequent attempt(s)), if mobile device 1 has successfully connected to second network 4, mobile device 1 can indicate to UICC 2 that a successful connection has occurred. In that case, at step S109 of reception, by UICC 2, of information representative of a network connection result, UICC 2 receives information representative of a successful connection. If, however, mobile device 1 has not been able to connect to second network 4, it may also advise UICC 2 that the attempt to connect to second network 4 has failed - in which case step S109 of reception by UICC 2 of information representative of a network connection result is a step of reception of information representative of a connection failure. In both cases, at step S110, the location variable (for example, the EF LOCI file) may be updated so that UICC 2 stores information indicating whether said connection attempt was successful or not.

According to some embodiments, and as shown in figure 2, the timer counting how much time has elapsed and/or the counter counting how many attempts at connection to second network 4 have been made can be started after reception S109, by UICC 2, of information indicative of a failure to connect to second network 4, and notably after update of the location variable at step S110. More specifically, a step S111 of checking the connection result from the information received at step S109 is carried out by UICC 2, and if a result of the check performed at step S111 is a connection failure (branch named "failure" from S111), the timer and/or counter is started at step S112.

If, however, a result of the check performed at step S111 is a success of the connection to second network 4 (branch named "success" from S111), no further steps are carried out.

According to some embodiments, memory 6 may store information indicating a timestep between two attempts to connect, so as to avoid consecutive attempts to connect that are so close together in time that an availability of second network 4 cannot realistically have changed.

If the timer has expired, or if the predefined maximum allowable number of attempts has been reached, which means that the repeated attempts at connecting have all failed, as shown by the branch to the right of S112 (named "failure") on figure 2, UICC 2 can request from mobile device 1 that it attempt connecting to first network 3 (step S113), to which it was connected prior to step S102 of disconnection. This ensures that, despite the unavailability of second network 4 or of the inability of mobile device 1 to connect thereto, mobile device 1 connects to a network and does not remain without any connection. This embodiment is particularly advantageous when first network 3 is a public network, such as a reliable public network and/or a public network with capacity to handle a high number of mobile devices, second network 4 being a private network of more limited capacity. Hence, although a user may wish to be connected to private second network 4, public first network 3 serves as a "fallback" network.

If, after renewed attempts at connecting, an attempt succeeds (as shown by the branch below S112 (named "success") on figure 2, the device has successfully connected to second network 4 and no further steps are carried out.

The present disclosure also relates to a set of instructions, in the form of a program, stored on UICC 2 and enabling UICC 2 to carry out method 100 presented above. The present disclosure also relates to a UICC containing such instructions, as well as to a mobile device containing UICC 2.

### Legend

S101: Reception of location or change of location information
S102: Disconnection from first network
S103: Update of location variable
S104: Request for network type information
S105: Reception of network type information
S106: Check of network type and availability
S107: Request for UICC reinitialisation
S108: Request for connection attempt to second network
S109: Reception of a connection status (successful or unsuccessful)
S110: Update of location variable
S111: Verification of connection status
S112: Launch of a timer/counter
S113: Request for connection to the first network

## Claims

1. A method (100) of switching a connection of a mobile device (1) from a first network (3) to a second network (4), the mobile device (1) comprising a secure element (2), the method comprising the following steps implemented by the secure element (2):
a. receiving (S101) data comprising network location information of the second network (4),
b. causing (S102) an interruption of a connection between the mobile device (1) and the first network (3),
c. requesting (S104) the mobile device (1) to obtain data comprising network type information of the second network (4),
d. receiving (S105) the data comprising network type information from the mobile device (1),
e. checking (S106) from the network location information and network type information:
i. whether the second network (4) is of a predefined network type among a private network and a public network, and
ii. whether the second network (4) is available, and
f. if the checking indicates that the second network (4) is of the predefined network type and is available, requesting (S108) the mobile device (1) to connect to the second network (4).

2. The method (100) of claim 1, wherein the secure element (2) is a user integrated circuit card (UICC), an electronic user integrated circuit card (eUICC), a subscriber identity module card (SIM) or an electronic subscriber identity module card (eSIM).

3. The method (100) of one of claims 1 and 2, wherein the network type information contains data indicating that the second network (4) is a public network or a 5G private network.

4. The method (100) of one of claims 1 to 3, wherein the step of causing (S102) an interruption of the connection between the mobile device (1) and the first network (3) is carried out:
- before requesting (S104) the mobile device (1) to obtain data comprising network type information of the second network (4), or
- after a reception (S109) of information indicative of a successful connection to the second network (4).

5. The method (100) of one of claims 1 to 4, wherein steps c. to f. are initiated upon receiving, by the secure element (2), of information from the second network (4) indicating that a change of location of the mobile device (1) has taken place from a geographical zone wherein the second network (4) is out of reach of the mobile device to a geographical zone wherein the second network (4) is within reach of the mobile device (1).

6. The method (100) of one of claims 1 to 5, further comprising, if the checking (S106) indicates that the second network (4) is of the predefined network type and is available, updating (S110) a variable in a memory (6) of the secure element (2) representative of a current network to which the mobile device (1) is connected.

7. The method (100) according to one of claims 1 to 6, further comprising:
g. checking (S111) whether the mobile device (1) has successfully connected to the second network (4), and
h. if the mobile device (1) has failed to connect to the second network (4), repeating steps c. to f. until
▪ a predefined amount of time has expired since step f. or
▪ step f. has been repeated a predefined number of times

8. The method (100) according to claim 7, further comprising, if the predefined amount of time has expired or if step f. has been repeated the predefined number of times:
i. reception, by the secure element (2) from the mobile device (1), of information indicative of a network rejection, and
j. requesting (S113), by the secure element (2), the mobile device (1) to connect to the first network (3).

9. The method according to one of claims 1 to 8, wherein the secure element (2) has a memory (6) storing a plurality of cell indicators associated with respective networks, and wherein step e. further includes checking whether a cell indicator received from the second network (4) is comprised in the plurality of cell indicators.

10. A computer program configured to be run by a secure element (2) and comprising instructions for implementing the method (100) according to one of claims 1 to 9.

11. A secure element (2) comprising a processor (5) and a memory (6), the memory (6) storing instructions executable by the processor (5) for implementing the method (100) according to one of claims 1 to 9.

12. A mobile device (1) comprising a secure element (2) according to claim 11.
